Europäisches Patentamt

**European Patent Office**

**Office européen des brevets**

(11) Publication number: **0 157 592 B1**

## (12) EUROPEAN PATENT SPECIFICATION

(45) Date of publication of patent specification: **29.04.92**  (51) Int. Cl.5: **A01M 7/00**

(21) Application number: **85302142.6**

(22) Date of filing: **27.03.85**

(54) **Boom assemblies.**

(30) Priority: **27.03.84 GB 8407913**

(43) Date of publication of application:
**09.10.85 Bulletin 85/41**

(45) Publication of the grant of the patent:
**29.04.92 Bulletin 92/18**

(84) Designated Contracting States:
**DE FR GB SE**

(56) References cited:
EP-A- 0 077 270        FR-A- 1 564 543
GB-A- 2 014 834        GB-A- 2 025 665
GB-A- 2 028 078        LU-A- 83 957

**MOTORISATION ET TECHNIOUE AGRICOLE,
no. 50, February 1983, pages
194-195,217,221,223-227, Bois-le-Roi, FR; "Les
rampes: des antagonismes à maîtriser"**

(73) Proprietor: **NATIONAL RESEARCH DEVELOP-
MENT CORPORATION
101 Newington Causeway
London SE1 6BU(GB)**

(72) Inventor: **Frost, Andrew Richard
1 The Old Bakery
Stevington Bedford(GB)**

(74) Representative: **Chandler, Derek Richard
Patent Department National Research Devel-
opment Corporation 101 Newington Cause-
way
London SE1 6BU(GB)**

EP 0 157 592 B1

## Description

This invention relates to boom assemblies and in particular to boom assemblies for agricultural use.

UK Patent 2028078 describes a boom assembly suspended by a plurality of links having inclined lines of action to provide stabilising or restoring forces on the boom against forces displacing the boom from a desired position. This arrangement is very effective in stabilising the position of a boom when a vehicle on which the boom is used, e.g. for spraying argicultural treatment liquids, is travelling over bumpy ground. The boom has to be stabilised to ensure uniformity of spray deposit in terms of area of ground covered from each sprayhead. However when this improved boom arrangement is used it is found that certain ground conditions can cause the boom to adopt positions in which the spray deposit is not uniform. These ground conditions include undulations of relatively long wavelength and ground of varying softness. The latter in particular can cause the vehicle carrying the boom to adopt a tilted attitude with respect to the ground surface for some distance, which attitude is followed by the boom, because of the differential deflection of the vehicle tyres, and suspension if provided, with the tilted altitude of the vehicle.

Similar problems arise with boom assemblies suspended at a single pivot point on the vehicle.

Attempts have been made to control the distance from the ground of a boom in such single pivot systems, e.g. European Patent Application 82401851.9 (published as 0077270) and UK Patent Application 7922218 (published as 2025665). In the system described in the above European Patent Application the correcting action is applied from time to time and the boom is free to swing between each correcting action. In the system described in the above UK Patent Application the correcting action is applied from time to time and the boom is held in the corrected position until the next correction is available. Furthermore in both these systems the height of the boom above the ground at the vehicle can change in an uncontrolled manner with vehicle tilt because of the fixed connection at the pivot.

In a Luxembourg published Patent Application (LU-A-83957) a boom suspension is described in which a piston and cylinder arrangement is positioned as part of a link between a frame part attached to the conveying vehicle and a frame part carrying the boom. The piston and cylinder arrangement is operable to vary the length of the link and thereby tilt the boom. The piston and cylinder arrangement is controlled by a device on the vehicle which responds to the actual inclination of the vehicle itself and, having regard to vehicle speed, adjusts the piston position to achieve a required boom tilt. The described arrangement relies on information about vehicle inclination, which, as mentioned above, is not always that of the ground surface.

It is an object of the invention to provide a boom arrangement to mitigate the problem of boom displacement arising from irregularities of the ground.

According to the invention there is provided a boom assembly comprising a boom, a support, suspension links extending from spaced pivot points on the support to spaced pivot points on the boom, the suspension links and the spacing between said pivot points on the boom and said pivot points on the support having dimensions set so as to provide a filter of vehicle roll frequencies to stabilise the boom with respect to the support, and at least one of said set dimension conditions of said suspension links and spacings being adjustable, means to force an alteration in said at least one adjustable suspension links and spacings from the set dimension conditions, and control means to control said means to force an alteration in the at least one adjustable suspension links and spacings, characterised in that said control means includes a distance sensor to measure the distance of the boom from the ground and means adapted to respond to said distance measurement to determine the alteration in said at least one adjustable suspension links and spacings to correct the distance of the boom from the ground, and that said control means is adapted to provide an output dependent on the displacement of the boom attitude at frequencies below vehicle movement roll frequencies to said means to force an alteration in the at least one adjustable suspension links and spacings to provide a continuous correction of a displacement of the boom attitude with respect to the ground more slowly than the stabilisation action of the set conditions.

Generally the assembly is fitted on a vehicle and the passive suspension stabilises the boom against displacement from a desired position when the vehicle moves over uneven ground while the action of the forcible alteration of a dimension corrects for displacement of the whole boom and suspension by movement of the vehicle itself from its normal attitude with respect to the ground surface when, for example, it tilts on its own suspension or tyre on a slope or lurches into a hollow in the ground.

The distance sensor may be a plurality of ultrasonic ranging devices along the boom and the control means may be effective to maintain a substantially equal distance at each device by said alteration of said dimension.

According to the invention there is also provided a method of stabilising a boom carried on a land vehicle for spraying and the like, to a desired height above the ground when the vehicle is moved over uneven ground including providing a multi-link suspension arrangement to stabilise the boom at vehicle roll frequencies and including an alterable dimension in said multi-link suspension and a suspension control arrangement energisable to alter said dimension characterised by sensing the distance of the boom from the ground and arranging said suspension control arrangement to force an alteration in a dimension of the multi-link suspension dependent on displacement of the boom attitude at frequencies below a selected value correcting for movement of the vehicle from its normal attitude with respect to the ground surface to achieve said desired height of the boom above the ground.

Embodiments of the invention will now be described with reference to the accompanying drawings in which:-

Figure 1 shows a schematic view of a boom suspension according to the invention,

Figure 2 shows in outline the behaviour of a boom suspension according to the invention,

Figure 3 shows a more detailed view of part of Figure 2,

Figure 4 is a dimensioned version of Figure 3, in accordance with the invention, and

Figures 5 and 6 show graphs of the performance of a suspension.

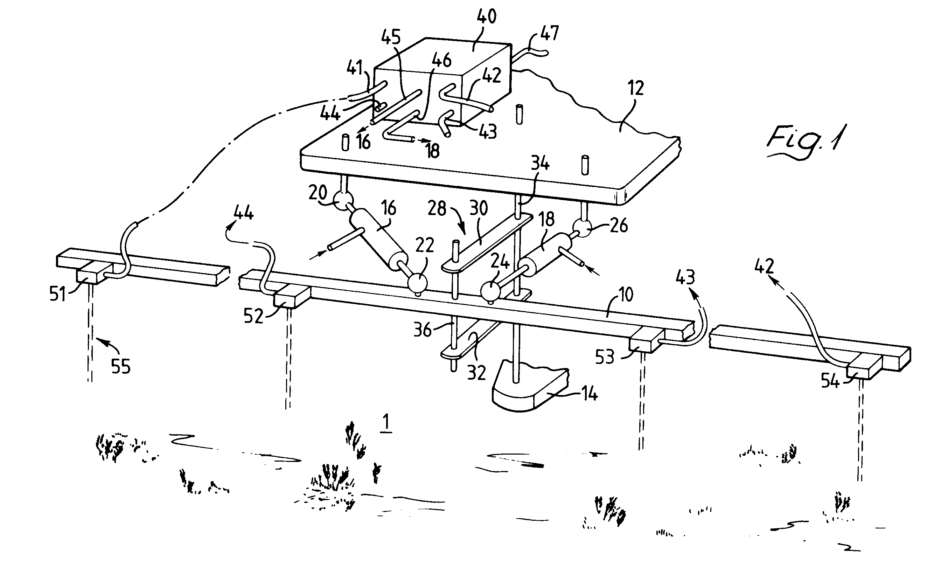

Figure 1 shows, in schematic form, a boom suspension according to the invention. This is conveniently arranged on a boom as described in UK Patent Specification 2028078B.

Two links, 16 and 18, the set length of which can be forcibly altered, are provided in the suspension of boom 10. Two links of alterable length are shown but in many cases one only is sufficient and this case is included in references to two links. Boom 10 carries a number, in this case four, sensors 51, 52, 53, 54, which can measure the distance between the boom and the ground. This action is represented by the beam of radiation 55 but any suitable sensor technique, such as ultrasonic, capacitive, electromagnetic, can be used. A control unit, 40, is conveniently mounted on the support 12 and receives signals at connections 41, 42, 43, 44 from the sensors 51 to 54. The control unit receives a suitable electrial supply 47 from the vehicles using the boom. The control unit also provides, in dependence on the signals from the sensors and any control parameters built into it, fluid pressure to operate links 16 and 18. The control unit may include a microprocessor to achieve the control function. Connections 45 and 46 are extended, flexibly if necessary, to the links 16 and 18. Conveniently links 16 and 18 include pneumatic or hydraulic actuators of the piston and cylinder type which can be altered in length by supply or release of fluid pressure. For this purpose unit 40 can include a pump or compressor. Hydraulic or pneumatic power may be available from the vehicle and only need to be controlled by unit 40.

The action of the control unit is to respond to signals from sensors 51 to 54 to forcibly alter the lengths of links 16 and 18 to maintain a substantially uniform distance between the boom and the ground surface represented at 1. Clearly with a long boom and uneven ground the same distance can not be maintained at all points along the boom but a suitable compromise, as described below, is aimed at.

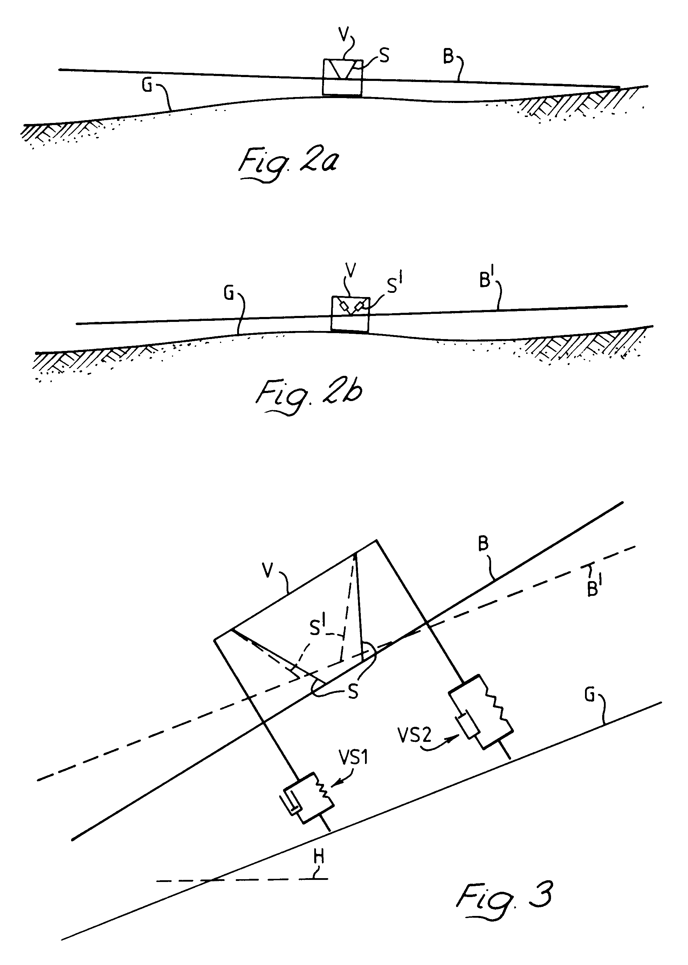

Figure 2 shows how, with certain ground conditions, the technique of keeping the boom level across the vehicle is disadvantageous. The suspension with fixed length links is indicated at S. As the vehicle tilts (Figure 2a) on a particular area of the undulating ground G the suspension S keeps the boom "square" across the vehicle by filtering out the fairly rapid vehicle roll frequencies. However due to other undulations in the ground the extremities of the boom B may now be in adverse positions or even, on a long boom, be in contact with the ground. A further problem is that the vehicle itself can tilt, on its tyres and suspension, to an angle greater than the actual slope of the ground it is traversing.

Figure 2b shows that the effect of the suspension according to the invention, S', is to modify the action of suspension S so that the boom B' is not necessarily "square" across the vehicle but is more equally distanced from the ground G.

Figure 3 shows the vehicle and its own tyres and suspension in more detail to illustrate the effect of the boom suspension. The suspension and tyres are represented by the damped fluid pressure units VS1, VS2, the other references are as in Figures 2a and 2b. The vehicle V tilts more than the slope of ground G to the horizontal, H, because of the deflection of suspension and tyres. With a boom suspension of fixed length links S the boom B tilts with respect to the ground G by the extra tilt of the vehicle. With links S' of forcibly adjustable length the boom can be brought to a position in which it is substantially parallel to the ground surface G.

The above analysis is "static" but the control system must operate dynamically to cope with the continuing change of ground shape.

The speed and frequency response of the control system is thus very important. It is also important to be able to retain the action of the set length links where appropriate.

The rolling motion of a vehicle on undulating ground can be broadly separated into a high frequency component and a low frequency component. The high frequency component is attenuated by the fixed length link arrangement but the low frequency component is used by this invention to adjust the boom by the forcible adjustment of link length. The exact values defined as high and low frequency will of course vary with ground shape and vehicle speed but can be adequately classified for practical cases. Also in practical cases the sensors of boom distance from the gound can be arranged to respond to the upper surface of a growing crop rather than the ground, but this does not alter the following discussion.

By way of example the behaviour of a boom on a vehicle travelling forward at 2 m/s over field undulations with wavelengths less than 85 m was considered. By setting up a mathematical model of suspension with fixed length links in terms of the complex frequency response function relating the angle of inclination of the boom with that of the vehicle it is possible to calculate the form of linkage required for a particular weight and moment of inertia of the boom and the vehicle. A suitable size of linkage can be established and the dimensions of the elements derived from the model.

At the roll frequency caused by chosen field conditions the response function should have the value to ensure that the boom follows the vehicle motion by the action of the fixed length linkage and this value should reduce to zero at a higher roll frequency to isolate the boom from shorter-term displacements of the vehicle. The boom suspension should similarly have a resonant frequency which is low but above the field condition frequency. In one case the resonant frequency was about three times the field condition frequency, providing the required attenuation of the higher frequencies.

Similarly the damping of the boom suspension using fixed length links is arranged to be only large enough to permit the field condition frequency to be followed as well as possible. Excessive damping adversely effects performances at this frequency and allows higher frequencies, especially those above the resonant frequency, to excite the suspension.

Having established the performance of the suspension down to the field condition frequency the behaviour of the forcibly adjustable links in accordance with the invention for even lower frequencies and where the vehicle tilts is to be defined.

This behaviour includes the ability of any electro-fluid-pressure device used to follow the signals from the distance sensors. In practice this device could include the sensor, an electrically operated fluid pressure valve and the piston-and-cylinder actuator in the forcibly adjustable link. Such a practical device was found capable of linear operation at angular velocities of up to about 1 rad/s. Also an upper limit for the motion frequency to which the forcibly adjustable link should respond was identified at 10 rad/s. The gain of the electro-fluid-pressure device is also significant. Too high a gain can make the system unstable. The gain is conveniently expressed as the rate of change of the length of the link per radian of net inclination of the boom to the ground. If the gain is too small the system does not respond enough to maintain the required relationship to the ground.

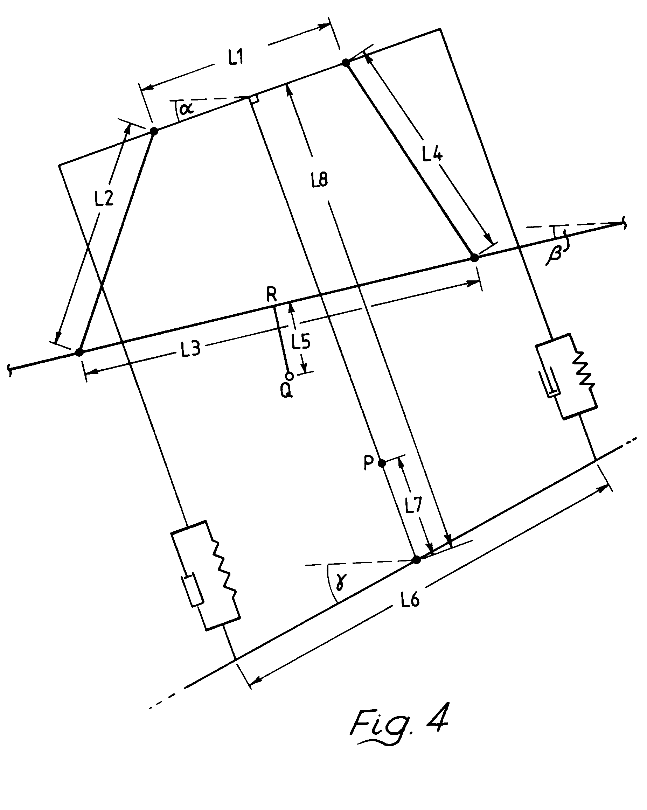

Considering a specific design modelled in the manner outlined above reference is directed to Figure 4. For a fixed link system the following dimensions are appropriate for the above field conditions:

L1 = 1.26 m
L2 = 0.76 m
L3 = 0.12 m
L4 = 0.76 m

These suit a boom of 150 kg on a vehicle of 5000 kg. The moment of inertia of the boom about Q is 300 $kgm^2$ and that of the vehicle about P is 1000 $kgm^2$. The stiffness coefficient of the vehicle in roll is 3 x $10^5$ N/m and the damping coefficient 2500 Ns/m. The existing dimensions are L5 = 0.05 m, L6 = 2.1 m, L7 = 1.0 m, L8 = 1.5 m. A damping coefficient for the boom suspension of 200 Nms/radian was selected.

The introduction of a link (L2 or L4 or both) of forcibly variable length to such a suspension for frequencies less than 10 rad/s requires that suitable parameters for the control system have to be determined so that the behaviour at higher frequencies is not degraded.

For simplicity it is assumed that the working fluid is incompressible and that sufficient fluid pressure is available to make the movement of the piston independent of the load on it. A control valve in control unit 40 responds to signals from the sensors and supplies fluid pressure to an actuator of a forcibly adjustable link. The overall response of the sensors, the valve and the actuator is represented by a relation between the gain, G, of the control means in terms of the forcible alteration of link length for change in inclination of the boom to the ground and a time constant T of the control valve and the sensor.

When one forcibly adjustable link, L2, is used the change in L2, L2, is expressed as follows:-

$$\frac{\delta L_2}{(\gamma - \beta)} = \frac{G}{(Ts + 1)s}$$

where s is the Laplace operator.

For the above value of 10 rad/s T could be 0.1 seconds, a smaller value would not be appropriate but a larger value, say 0.5 seconds, could be as effective. Stability analysis for values of G indicated that above G = 0.7 ms$^{-1}$ rad$^{-1}$ instability occurred. Possible values for G are thus 0.1 and 0.3 ms$^{-1}$ rad$^{-1}$, although others are clearly possible in this or another design.

The behaviour of the suspension with such values of G and T has been analysed as outlined above. The results of this analysis showed that the addition of the forcibly alterable link improved the performance of the suspension at the lower frequencies without impairing the performance attained by the suspension using set length links at the higher frequencies. The use of various values of T at constant values of G had little effect on the results of the analysis but values of G of around 0.3 ms$^{-1}$ rad$^{-1}$ for a range of values of T appeared to be better than other values of G, giving an amplitude ratio of the desired value at about 1.0 instead of values such as 1.2 for the set length links described above at the lower frequencies (see Figure 5 curve A). Such an amplitude ratio (1.2) represents for a 10 m boom on a vehicle at rest tilted on its suspension across a slope of 10° a difference of 350 mm between the ground clearances at the ends of the boom. Dynamically a ratio above 1.0 exaggerates the tilting of the vehicle in its effect on the boom position in a similar manner. At the resonant frequency (about 0.43 rad/s) the amplitude ratios were estimated to be greater than 1.0, rising with G to 3.0 for G = 0.3 ms$^{-1}$ rad$^{-1}$, but at above the resonant frequency the required attenuation of response of the control means beyond about 0.6 rad/s ensured that the action of the set length links was effective and not significantly altered. Small phase advances were obtained at both values of G mentioned above. The enhanced amplitude ratio at resonance is not required but it is expected that this can be remedied by routine refinement of the design. Figure 5 shows the variation of amplitude ratio AR and phase advance PA for a rigidly attached boom (curve A) a boom with set length link suspension (curve B) and with forcibly alterable length link suspension (curve C) for a range of frequencies produced by undulating ground including the lower (below some 0.6 rad/s) and higher frequencies. The peak at about 7 rad/s is the effect of vehicle suspension and the attenuation of the response is well-shown. The value of G is 0.3 ms$^{-1}$ rad$^{-1}$ and T is 0.5 s.

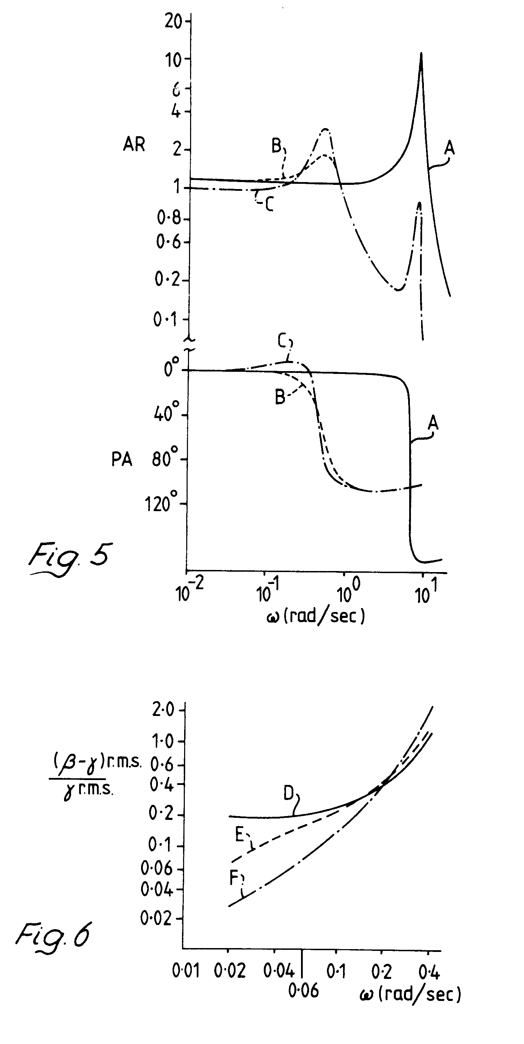

Figure 6 shows the performance of the embodiment specifically described in terms of the angle between the boom and the ground ($\gamma - \beta$) and the slope of the ground ($\gamma$) for the same values of T at C values of 0 (curve D) 0.1 (curve E) and 0.3 (curve F). Other values of T do not significantly alter this response. The values of $\omega$ are below resonance of the boom and show the considerable control achieved.

The power required to achieve such control is not great. A few tens of watts are sufficient and this power is readily available from a spray vehicle. The power requirements are so small that a wholly electrical control means can be used with an electrical actuator such as a screw-operated type. Clearly a fluid pressure actuation can be used if preferred.

A total power for the control means and actuator of about 100 watts is considered adequate.

If the control or the actuator should fail the suspension can revert to the set length link condition and perform as expected for this configuration.

The suspension according to the invention provides a significant extension to the range of operation of the set length link suspension, coping with ground and vehicle induced displacements of the boom to produce a stable boom attitude down to very low disturbance frequencies such as 0.01 rad/s. The identification of the importance of the gain of the control means to the proper operation and the relative unimportance of the speed of response, as well as the quite small power required, permit an effective suspension to be provided for various sizes of boom and operating conditions. Although there are particular values of G, T and other variables these values are by way of example to those skilled in the art as to the design of a suspension of a specific purpose.

The invention has been specifically described with reference to the adjustment of the length of a link. However other dimensions in the passive suspension can be adjusted together with or instead of the length of a link. For example the distance between pivots 20 and 26 and/or pivots 22 and 24 could be altered.

**Claims**

1. A boom assembly comprising a boom (10) a support (12) suspension links (16, 18) extending from spaced pivot points (20, 26) on the support (12) to spaced pivot points (22, 24) on the boom (10) the suspension links (16, 18) and the spacing between said pivot points (20, 26) on the boom and said pivot points (22, 24) on the support having dimensions set so as to provide a filter of vehicle roll frequencies (A) to stabilise the boom (10) with respect to the support (12) and at least one of said set dimension conditions of said suspension links (16, 18) and spacings being adjustable, means (45, 46) to force an alteration in said at least one adjustable suspension links (16, 18) and spacings from the set dimension conditions, and control means (40) to control said means (45, 46) to force an alteration in the at least one adjustable suspension links (16, 18) and spacings, characterised in that said control means (40) includes a distance sensor (51, 52, 53, 54) to measure the distance of the boom (10) from the ground and means adapted to respond to said distance measurement to determine the alteration in said at least one adjustable suspension links (16, 18) and spacings to correct the distance of the boom (10) from the ground, and that said control means (40) is adapted to provide an output dependent on the displacement of the boom (10) attitude at frequencies (C) below vehicle movement roll frequencies (A) to said means (45, 46) to force an alteration in the at least one adjustable suspension links (16, 18) and spacings to provide a continuous correction of a displacement of the boom attitude with respect to the ground more slowly than the stabilisation action of the set conditions.

2. An arrangement according to Claim 1 characterised in that the adjustable dimension is the set length of a link in the suspension.

3. An arrangement according to Claim 1 characterised in that the adjustable dimension is the set distance between pivots of the suspension.

4. An arrangement according to Claim 1 characterised in that the rate of change of a set condition by said forced alteration is made proportional to the measured difference between the angle of inclination ($\beta$) of the boom (10) and that ($\gamma$) of the ground (1) over which the suspension carries the boom.

5. An arrangement according to Claim 1 characterised in that the response of the control means is restricted to below 10 rad/s.

6. An arrangement according to Claim 5 for tractor carriage characterised in that the links and spacings of set condition are effective for frequencies above 0.7 rad/s and the response of the control means is restricted to below 0.6 rad/s.

7. An arrangement according to Claim 1 characterised in that a plurality of ultrasonic ranging devices along the boom and the control means is effective to maintain a substantially equal distance at each device by said alteration of said dimension.

8. A method of stabilising a boom (10) carried on a land vehicle for spraying and the like, to a desired height above the ground (1) when the vehicle is moved over uneven ground including providing a multi-link suspension arrangement (16, 18, 20-26, 22-24) to stabilise the boom at vehicle roll frequencies (A) and including an alterable dimension (16, 18) in said multi-link suspension and a suspension control arrangement (40) energisable to alter said dimension characterised by sensing (51, 52, 53, 54) the distance of the boom from the ground (1) and arranging said suspension control arrangement (40) to force an alteration in a dimension of the multi-link suspension (16, 18) dependent on displacement of the boom attitude at frequencies below a selected value (C) correcting for movement of the vehicle (12) from its normal attitude with respect to the ground surface to achieve said desired height of the boom above the ground.

**Revendications**

1. Rampe de pulvérisation comprenant une rampe (10), un support (12), des bielles de suspension (16,18) s'étendant depuis des points de pivotement espacés (20,26) sur le support (12) jusqu'à des points de pivotement espacés (22,24) sur la rampe (10), les bielles de suspension (16,18) et l'espacement entre les points de pivotement (20,26) sur la rampe et les points de pivotement (22,24) sur le support ayant des dimensions fixées de façon à filtrer des fréquences de roulis du véhicule (A) pour stabiliser la rampe (10) par rapport au support (12), l'une au moins de ces conditions de dimensions fixées des bielles de suspension (16,18) et des espacements étant réglable, des moyens (45,46) pour provoquer une modification par rapport aux conditions de dimensions fixées d'au moins la dimension réglable des bielles de suspension (16,18) et/ou des espacements, et des moyens de commande (40) pour commander les moyens (45,46) provoquant une modification d'au moins la dimension réglable des bielles de suspension (16,18) et/ou des espacements, caractérisée en ce que ces moyens de commande (40) comportent un capteur de distance (51,52,53,54) pour mesurer la distance au sol de la rampe (10) et des moyens adaptés pour répondre à cette mesure de distance pour déterminer la modification d'au moins la dimension réglable des bielles de suspension (16,18) et/ou des espacements pour corriger la distance au sol de la rampe (10), et en ce que les moyens de commande (40) sont adaptés pour envoyer une sortie fonction du déplacement de l'orientation de la rampe (10) pour des fréquences (C) inférieures aux fréquences de roulis du mouvement du véhicule (A) à ces moyens (45,46) pour provoquer une modification d'au moins la dimension réglable des bielles de suspension (16,18) et/ou des espacements, pour corriger de façon continue un déplacement de l'orientation de la rampe par rapport au sol plus lentement que l'action de stabilisation des conditions fixées.

2. Agencement selon la revendication 1, caractérisé en ce que la dimension réglable est la longueur fixée d'une bielle dans la suspension.

3. Agencement selon la revendication 1, caractérisé en ce que la dimension réglable est la distance fixée entre les pivots de la suspension.

4. Agencement selon la revendication 1, caractérisé en ce que le taux de changement d'une condition fixée par cette modification forcée est proportionnel à la différence mesurée entre l'angle d'inclinaison ($\beta$) de la rampe de pulvérisation (10) et celle ($\gamma$) du terrain (1) sur lequel la suspension porte la rampe.

5. Agencement selon la revendication 1, caractérisé en ce que la réponse des moyens de commande est limitée à moins de 10 radians/seconde.

6. Agencement selon la revendication 5 pour un chariot tracteur, caractérisé en ce que les bielles et les espacements de la condition fixée sont efficaces pour des fréquences supérieures à 0,7 radian/seconde et la réponse des moyens de commande est limitée à moins de 0,6 radian/seconde.

7. Agencement selon la revendication 1, caractérisé en ce qu'une multiplicité de dispositifs ultrasoniques disposés le long de la rampe de pulvérisation et les moyens de commande sont efficaces pour maintenir une distance pratiquement constante au niveau de chaque dispositif par la modification de cette dimension.

8. Procédé pour stabiliser une rampe de pulvérisation (10), portée par un véhicule terrestre à des fins de pulvérisation et analogues, à une hauteur désirée au-dessus du sol (1) lorsque le véhicule se déplace sur un sol inégal, consistant à procurer un agencement de suspension à plusieurs bielles (16,18,20-26,22-24) pour stabiliser la rampe pour des fréquences de roulis du véhicule (A) et à inclure une dimension modifiable (16,18) dans cette suspension à plusieurs bielles et un agencement de commande de suspension (40) pouvant être mis en oeuvre pour modifier cette dimension, caractérisé en ce qu'on détecte (51,52,53,54) la distance au sol (1) de la rampe de pulvérisation et qu'on prend des dispositions dans cet agencement de contrôle de la suspension (40) pour provoquer une modification dans une dimension de la suspension à plusieurs bielles (16,18) fonction du déplacement de l'orientation de la rampe pour des fréquences inférieures à une valeur choisie (C) corrigeant le mouvement du véhicule (12) par rapport à son orientation normale par rapport à la surface du sol pour obtenir la hauteur désirée de la rampe de pulvérisation au-dessus du sol.

## Patentansprüche

1. Eine Auslegeranordnung mit einem Ausleger (10), einem Träger (12), Aufhängungsgliedern (16, 18), die sich von beabstandeten Drehpunkten (20, 26) am Träger (12) bis zu beabstandeten Drehpunkten (22, 24) am Ausleger (10) erstrecken, wobei die Aufhängungsglieder (16, 18) und der Abstand zwischen den Drehpunkten (22, 24) am Ausleger und den Drehpunkten (20, 26) am Träger Abmessungen aufweisen, die so festgelegt sind, daß sie eine Filtereinrichtung für Fahrzeugrollfrequenzen (A) ergeben, um den Ausleger (10) relativ zum Träger (12) zu stabilisieren, und wenigstens einer der festgelegten Abmessungsgrößen der Aufhängungsglieder (16, 18) und Abstände verstellbar ist, mit einer Vorrichtung (45, 46) zum Erzwingen einer Änderung in dem wenigstens einen verstellbaren Aufhängungsglied (16, 18) und Abstand gegenüber den festgelegten Abmessungsgrößen, und einer Steuervorrichtung (40) zum Regeln der Vorrichtung (45, 46) zum Erzwingen einer Änderung in dem wenigstens einen verstellbaren Aufhängungsglied (16, 18) und Abstand, dadurch gekennzeichnet, daß die Steuervorrichtung (40) einen Abstandssensor (51, 52, 53, 54) zum Messen des Abstandes des Auslegers (10) vom Boden und eine zur Reaktion auf die Abstandsmessung ausgebildete Einrichtung zum Bestimmen der Änderung in dem wenigstens einen verstellbaren Aufhängungsglied (16, 18) und Abstand aufweist, um den Abstand des Auslegers (10) vom Boden zu korrigieren, und daß die Steuervorrichtung (40) so ausgebildet ist, daß sie ein von der Lageabweichung des Auslegers (10) abhängiges Ausgangssignal bei Frequenzen (C) unterhalb von Fahrzeugbewegungs-Rollfrequenzen (A) an die Vorrichtung (45, 46) zum Erzwingen einer Änderung in dem wenigstens einen verstellbaren Aufhängungsglied (16, 18) und Abstand abgibt, um eine kontinuierliche Korrektur einer Lageabweichung des Auslegers relativ zum Boden langsamer im Vergleich zur Stabilisierungswirkung der festgelegten Zustandsgrößen zu bewirken.

2. Eine Anordnung nach Anspruch 1, dadurch gekennzeichnet, daß die verstellbare Abmessung die festgelegte Länge eines Gliedes in der Aufhängung ist.

3. Eine Anordnung nach Anspruch 1, dadurch gekennzeichnet, daß die verstellbare Abmessung der festgelegte Abstand zwischen Drehpunkten der Aufhängung ist.

4. Eine Anordnung nach Anspruch 1, dadurch gekennzeichnet, daß die Änderungsgeschwindigkeit einer festgelegten Zustandsgröße durch die erzwungene Änderung proportional ist zur gemessenen Differenz zwischen dem Neigungswinkel ($\beta$) des Auslegers (10) und demjenigen ($\gamma$) des Bodens (1), über den die Aufhängung den Ausleger transportiert.

5. Eine Anordnung nach Anspruch 1, dadurch gekennzeichnet, daß die Reaktion der Steuervorrichtung auf unterhalb 10 rad/s beschränkt ist.

6. Eine Anordnung nach Anspruch 5 für Zugmaschinentransport, dadurch gekennzeichnet, daß die Glieder und Abstände festgelegter Zustandsgrößen für Frequenzen oberhalb 0,7 rad/s wirksam sind und die Reaktion der Steuervorrichtung auf unterhalb 0,6 rad/s beschränkt ist.

7. Eine Anordnung nach Anspruch 1, dadurch gekennzeichnet, daß mehrere Ultraschall-Entfernungsmeßgeräte längs des Auslegers angeordnet sind und die Steuervorrichtung die Aufrechterhaltung eines im wesentlichen gleichen Abstandes an jedem Gerät durch die Änderung der Abmessung bewirkt,

8. Ein Verfahren zum Stabilisieren eines an einem Landfahrzeug transportierten Auslegers (10) zum Spritzen und dgl. auf einer gewünschten Höhe über dem Boden (1), wenn das Fahrzeug über unebenen Boden bewegt wird, mit dem Bereitstellen einer Mehrfachgelenk-Aufhängungsanordnung (16, 18, 20-26, 22-24) zum Stabilisieren des Auslegers bei Fahrzeugrollfrequenzen (A) und mit einer veränderbaren Abmessung (16, 18) in der Mehrfachgelenk-Aufhängung und einer zwecks Änderung der Abmessung erregbaren Aufhängungs-Steuervorrichtung (40), gekennzeichnet durch Ermitteln (51, 52, 53, 54) des Abstandes des Auslegers vom Boden (1) und Veranlassen, daß die Aufhängungs-Steuervorrichtung (40) eine Änderung einer Abmessung in der Mehrfachgelenk-Aufhängung (16, 18) in Abhängigkeit von der Lageabweichung des Auslegers bei Frequenzen unterhalb eines gewählten Wertes (C) erzwingt und dadurch Bewegungen des Fahrzeugs (12) um seine normale Lage relativ zur Bodenoberfläche korrigiert, um die gewünschte Höhe des Auslegers über dem Boden zu erzielen.

Fig.1

*Fig. 2a*

*Fig. 2b*

*Fig. 3*

Fig. 4

Fig. 5

Fig. 6